# FASCICULE DE BREVET EUROPEEN

(11) **EP 1 066 946 B1**
(45) Date de publication et mention de la délivrance du brevet: **29.01.2003**
(21) Numéro de dépôt: 00401480.9
(22) Date de dépôt: 26.05.2000
(51) Int. Cl.: B29C 45/00, F21V 7/22

(54) **Procédé de fabrication de pièces optiques pour éclairage ou signalisation de véhicules automobiles**
Verfahren zur Herstellung von optischen Teilen für Fahrzeugbeleuchtung oder -Signalisierung
Method for producing optical parts for motor vehicle illumination or signalisation

(30) Priorité: 29.06.1999 FR 9908300
(43) Date de publication de la demande: 10.01.2001
(73) Titulaire: VALEO VISION, 93012 Bobigny Cédex (FR)
(72) Inventeur: Ortiz, José, 93012 Bobigny Cedex (FR)
(74) Mandataire: Lemaire, Marc

(56) Documents cités:
- EP-A- 0 552 742
- EP-A- 0 630 955
- EP-A- 0 790 280
- PATENT ABSTRACTS OF JAPAN vol. 18, no. 108 (M-1564), 22 février 1994 (1994-02-22) -& JP 05 305626 A (TOPPAN PRINTING CO LTD), 19 novembre 1993 (1993-11-19)

## Description

L'invention concerne le domaine de la fabrication de pièces optiques pour l'éclairage ou la signalisation de véhicules automobiles.

Plus précisément, l'invention concerne un procédé de fabrication de telles pièces optiques par injection, en une seule étape, dans un moule, d'une composition polymère à l'état fondu.

Pour la fabrication. de pièces optiques telles que des miroirs, des masques, etc., on utilise largement de tels procédés (FR 2 622 501) avec des polymères de type thermoplastiques ou thermodurcissables.

Mais, quel que soit le procédé d'injection et la composition polymère utilisés, on observe un effet de dégazage du polymère constitutif de ces pièces.

Les vapeurs de dégazage condensent ensuite sur les différentes pièces optiques d'éclairage. Par exemple, dans les projecteurs, les vapeurs de dégazage issues des miroirs réalisés par injection de résines polymères, vont se condenser sur les glaces de ces projecteurs.

Cette condensation produit, à la surface de ces pièces, un ternissement ou une irisation tout à fait indésirable. Ce phénomène est souvent appelé selon la terminologie anglo-saxonne « fogging ».

Corrélativement, le dégazage s'accompagne d'une perte de poids des pièces réalisées par les procédés d'injection de la technique antérieure, et la migration vers l'extérieur des produits volatils. Le dégazage s'accompagne d'un vieillissement des pièces et de la diminution de la résistance mécanique de celles-ci.

De plus afin d'améliorer les propriétés mécaniques des pièces obtenues, ces polymères sont généralement chargés, par exemple avec des charges minérales et/ou des charges fibreuses telles que des fibres de verre. Mais, l'état de surface des pièces ainsi obtenues n'est pas satisfaisant, en particulier, pour une utilisation de ces pièces en tant que miroirs.

Pour remédier à ce type d'inconvénient, il est nécessaire d'avoir recours à des techniques relativement compliquées telles que la technique d'injection-moulage « bi-matière », par laquelle on injecte successivement une matière thermoplastique pour former une peau ayant de bonnes propriétés de surface, puis une matière thermodurcissable ou thermoplastique chargée pour former une âme ayant de bonnes propriétés mécaniques (voir par exemple les brevets français FR 2 758 128 et FR 2 643 849).

Une autre solution consiste à améliorer l'état de surface de pièces injectées avec certains thermoplastiques chargés, par mélange d'une faible quantité (10 à 15% en poids) de polytéréphtalate d'éthylène, à ces thermoplastiques.

Encore une autre solution pour améliorer l'état de surface de certains polymères chargés consiste à déposer un vernis sur les surfaces à protéger. Un choix judicieux de vernis permet en outre de limiter les phénomènes de dégazage de la matrice polymère.

Un but de l'invention est de remédier au problème du dégazage, en améliorant à la fois :
- la tenue à la chaleur (notamment par une meilleure protection thermique) des pièces réalisées par injection de résines polymères ; et
- leurs propriétés mécaniques,
ceci tout en se passant éventuellement de l'utilisation d'un vernis.

Ce but est atteint grâce à un procédé de fabrication de pièces optiques pour dispositif d'éclairage ou de signalisation de véhicules automobiles, par injection en une seule étape dans un moule, d'une composition polymère à l'état fondu, caractérisé en ce qu'on mélange, pour obtenir la composition polymère, un polymère principal et un polymère à cristaux liquides ayant, à la température de mise en oeuvre du procédé, une viscosité plus faible que celle du polymère principal.

Selon le procédé conforme à la présente invention, du fait que le polymère à cristaux liquides a une plus faible viscosité que le polymère principal, celui-ci migre, au cours de l'injection, vers la surface de la pièce moulée. Ainsi, le polymère à cristaux liquides forme une couche à proximité de la surface permettant d'améliorer les propriétés mécaniques et la tenue à la chaleur des pièces injectées (notamment par une meilleure protection thermique).

La viscosité d'un polymère est directement liée à son poids moléculaire. Le polymère principal a une distribution du poids moléculaire des molécules qui le compose, avec un maximum correspondant à un poids moléculaire supérieur à celui du polymère à cristaux liquides. Mais certaines molécules du polymère principal ont un poids moléculaire équivalent ou inférieur à celui du polymère à cristaux liquides. Ainsi, certaines molécules du polymère principal migrent-elles aussi vers la surface de la pièce moulée. Par ailleurs, la vitesse d'écoulement des molécules à proximité de cette surface étant nulle ou presque nulle, des molécules du polymère principal de poids moléculaire supérieur à celui du polymère à cristaux liquides, se trouvent également au voisinage de la surface. Lorsqu'il est indiqué que le polymère à cristaux liquides forme une couche à proximité de la surface, il faut comprendre que l'on a un gradient de concentration du polymère à cristaux liquides, décroissant à partir de la surface.

Si le polymère à cristaux liquides et le polymère principal sont en outre non miscibles entre eux, la couche de polymère à cristaux liquides peut être discontinue et former un maillage. Dans ce maillage, les molécules de polymère à cristaux liquides sont principalement orientées dans le sens de l'écoulement, dans un plan parallèle à cette surface.

Ainsi, par exemple, avec 10% en poids de polymère à cristaux liquides mélangés avec du polyéther sulfone, il se forme, si l'on met en oeuvre le procédé conforme à la présente invention avec un moule présentant une surface concave externe et une surface convexe interne, essentiellement une seule couche à proximité de la surface externe de la pièce. Cette couche est discontinue et forme un maillage.

Avec 15% en poids de polymère à cristaux liquides, mélangé avec du polyether sulfone, il se forme, si l'on met en oeuvre le procédé conforme à la présente invention, dans le même moule que pour l'exemple précédent, essentiellement deux couches, chacune étant disposée à proximité d'une surface différente.

La concentration en cristaux liquides, plus importante près de la surface, ou des surfaces, permet une meilleure protection thermique du coeur de la pièce où la concentration en polymère principal est plus importante. En même temps, les cristaux liquides qui présentent de bonnes propriétés d'imperméabilité vis à vis des gaz, ralentissement en particulier dans un sens, la migration de l'oxygène vers le coeur de la pièce et limitent donc les réactions de thermo-oxydation, et dans l'autre sens, ralentissent la migration vers l'extérieur des produits volatils formés lors de la dégradation thermique du polymère principal.

Dans ce qui suit la composition polymère utilisée pour la mise en oeuvre du procédé selon l'invention sera décrite comme étant constituée d'un mélange d'un polymère principal et d'un polymère à cristaux liquides. Il doit être compris que le polymère principal peut lui même être une composition de plusieurs polymères et que le polymère à cristaux liquides peut être une composition polymère à base de plusieurs polymères à cristaux liquides et contenant ou pas des charges minérales, organiques ou autres. On a déjà proposé de réaliser des objets à base de mélanges de polymères compatibles ou rendus compatibles, de manière à obtenir que ces objets présentent des caractéristiques mécaniques et physiques souhaitées. Dans la réalisation de ces objets, on s'efforce de rendre le mélange aussi homogène que possible. Selon l'invention, on cherche au contraire à favoriser une séparation du polymère principal et du polymère à cristaux liquides mélangés.

Avantageusement, le procédé selon l'invention :
- comprend une étape favorisant la migration du polymère à cristaux liquides vers la surface des pièces,
- comprend un dépôt d'une matière réfléchissante, préférentiellement par aluminiage, directement sur une surface optique des pièces, sans vernissage de cette surface ;
- est mis en oeuvre avec une composition polymère injectée à partir d'une buse dans le moule, ce moule étant maintenu, pendant une étape de remplissage du moule, une étape de maintien, et une étape de refroidissement de la pièce, à une température inférieure à celle de la buse.

Cependant, avantageusement, la température du moule est suffisante pour minimiser les phénomènes de post-retrait pouvant intervenir lors d'un recuit ou après la fabrication de la pièce, lors d'une élévation de température de la pièce, par exemple lorsque la pièce est un projecteur, lors du fonctionnement de celui-ci.

Avantageusement, l'invention concerne également l'utilisation d'une composition polymère pour la fabrication de pièces optiques pour dispositif d'éclairage ou de signalisation de véhicules automobiles, cette composition polymère étant injectée à l'état fondu, en une seule étape, dans un moule, et la composition polymère étant constituée d'un polymère principal et d'un polymère à cristaux liquides dont la viscosité est inférieure à celle du polymère principal.

Dans ce cas, l'invention possède éventuellement les caractéristiques suivantes, prises séparément ou en combinaison :
- le polymère principal est un polymère thermoplastique ou thermodurcissable ;
- le polymère à cristaux liquides est en concentration inférieure à 50% en poids ; et plus préférentiellement à 15%;
- le polymère à cristaux liquides est une résine de type polyester, contenant ou pas des charges minérales, organiques ou autres ;
- le polymère principal est du polystyrène syndiotactique du polyether sulfone, ou autre.

Avantageusement, l'invention concerne aussi une pièce optique pour dispositif d'éclairage ou de signalisation de véhicules automobiles, obtenues par injection à l'état fondu en une seule étape dans un moule, d'une composition polymère, cette composition comportant au moins une zone ayant un gradient de concentration en polymère à cristaux liquides, croissant en direction de l'une des surfaces de la pièce pour des concentrations faibles en cristaux liquides (< 10% en poids) et vers les deux surfaces pour des concentrations plus élevées.

Dans ce cas, l'invention possède éventuellement les caractéristiques avantageuses suivantes, prises séparément ou en combinaison :
- la pièce optique est constituée d'un polymère principal thermoplastique ou thermodurcissable et d'un polymère à cristaux liquides ;
- la pièce optique comprend un polymère principal qui est du polystyrène syndiotactique, du polyether sulfone ou autre.
- la pièce optique comporte un dépôt réfléchissant, préférentiellement réalisé par aluminiage, sur une surface optique, sans vernis entre cette surface et ce dépôt.

D'autres aspects, buts et avantages apparaîtront à la lecture de la description détaillée qui suit. L'invention sera aussi mieux comprise à l'aide des dessins sur lesquels :
- la figure 1 représente schématiquement en coupe longitudinale un exemple d'installation d'injection, pressage et moulage, pour la mise en oeuvre du procédé selon l'invention ;
- la figure 2 représente schématiquement en coupe selon un plan passant par l'axe correspondant à la direction générale d'éclairage, une pièce optique obtenue par le procédé représenté à la figure 1 ; et
- la figure 3 est un diagramme représentant la perte en poids de pièces conformes à la présente invention, en fonction du temps, lorsqu'elles sont étuvées à 180° C environ.

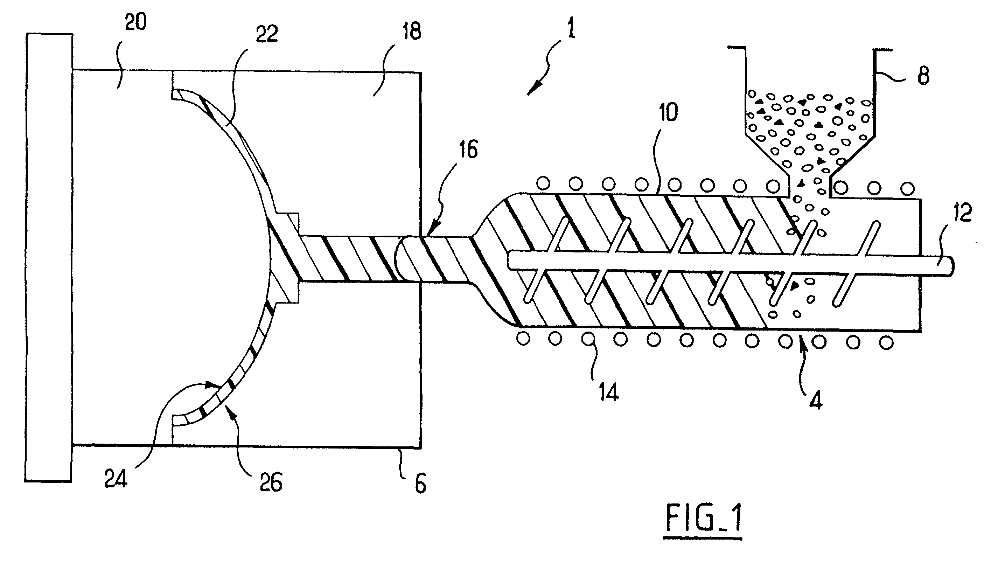

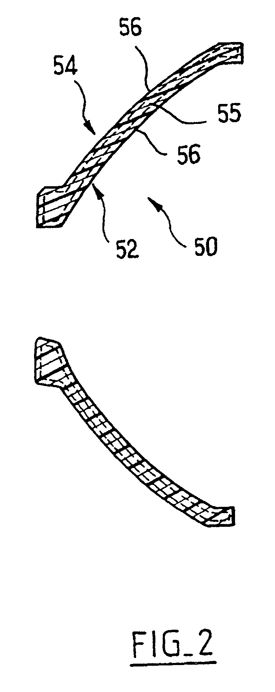

Sur les figures 1 et 2, on a illustré, à titre d'exemple, la réalisation d'un réflecteur 50 pour éclairage de véhicule automobile.

La figure 1 montre une installation 1 d'injection, pressage et moulage comprenant un cylindre d'injection 4, un moule 6 et une trémie 8. Le cylindre d'injection 4 comporte principalement un fourreau 10, une vis d'Archimède 12, des moyens de chauffage 14 et une buse 16.

Une composition polymère est obtenue par mélange d'un polymère principal et d'un polymère à cristaux liquides. Ceux-ci sont introduits dans la trémie 8, sous forme d'un mélange de deux types de granulés, d'un mélange de granulés et de poudre, d'un jonc enrobé, etc. Dans cette composition polymère, le polymère à cristaux liquides représente avantageusement un pourcentage en poids inférieur à 15%. Le mélange s'écoule de la trémie 8 dans le fourreau 10 puis est entraîné dans celui-ci grâce à la vis 12. Le mélange du polymère principal et du polymère à cristaux liquides est acheminé dans le fourreau 10 en direction du moule 6. Grâce aux moyens de chauffage 14, disposés sur les parois du fourreau 10, le mélange est chauffé et porté à l'état fondu, c'est à dire liquide ou pâteux.

Le moule comporte un poinçon 18 et une matrice 20. Le poinçon 18 et la matrice 20 sont assemblés de manière à ménager, dans une position particulière et précisément définie, un espace entre eux définissant une empreinte de moulage 22.

Si la matrice 20 est fixe, le poinçon 18 est mobile et inversement.

Plus précisément, le poinçon 18 délimite l'empreinte 22 par une face convexe de moulage 24, et la matrice 20 délimite l'empreinte 22 par une face concave de moulage 26.

Au cours d'une étape de remplissage, le mélange à l'état fondu est injecté par la buse 16 dans l'empreinte 22.

A la température de mise en oeuvre du procédé, le polymère à cristaux liquides a une viscosité inférieure à celle du polymère principal et ils ne sont pas miscibles. Ceci a pour conséquence que lors de l'injection du mélange dans la buse 16 et dans l'empreinte 22, des phénomènes hydrodynamiques et d'énergie de surface provoquent une concentration du polymère à cristaux liquides, à proximité de la surface, c'est à dire essentiellement à proximité des faces convexe de moulage 24 et concave de moulage 26. En effet, même si l'injection selon l'invention se fait en une seule étape, le polymère à cristaux liquides, plus fluide, se déplace de telle manière qu'il présente une concentration plus élevée à proximité de l'une ou l'autre surface du réflecteur 50, c'est à dire à proximité de la surface côté poinçon 18 ou celle côté matrice 20.

Après l'étape de remplissage de l'empreinte 22, suit une étape de maintien pendant laquelle la matière injectée est maintenue dans le moule 6 à température constante.

Vient ensuite une étape de refroidissement, pendant laquelle la température de la pièce se rapproche de celle du moule qui est refroidi par action d'un réfrigérant à proximité de l'empreinte 22. Le réflecteur 50 moulé et refroidi est alors suffisamment rigide pour résister aux efforts d'éjection. Le réflecteur 50 est ensuite éjecté du moule 6.

On a constaté que, par un tel moulage, on obtient en une seule opération, un réflecteur 50 moulé qui présente une excellente qualité de surface.

Comme représenté schématiquement sur la figure 2, le réflecteur 50 comporte une matrice 55 et une couche plus superficielle 56 formée d'un maillage.

Le réflecteur 50 comporte une face concave 52 et une face convexe 54. La face concave 52 est destinée à former une face réfléchissante après revêtement par une couche réfléchissante, par exemple en aluminium. Le polymère à cristaux liquides ayant migré vers la surface de la matière injectée à l'état fondu dans l'empreinte 22, l'ensemble du réflecteur 50 et plus particulièrement les couches superficielles 56 présentent une concentration plus importante en cristaux liquides, que la matrice 55.

De plus, les molécules du polymère à cristaux liquides ayant une forme assimilable à des bâtonnets ou des réglettes, les contraintes de cisaillement lors de l'injection, à l'état fondu, provoquent l'orientation de ces bâtonnets de manière relativement alignée dans le sens de l'écoulement, et favorisent la formation d'un maillage.

Ce maillage confère donc au réflecteur 50 obtenu, outre de bonnes propriétés de surface, un certain nombre d'autres avantages comme :
- de meilleures propriétés mécaniques, essentiellement grâce à l'orientation, principalement dans un plan parallèle à la surface, des molécules du polymère à cristaux liquides constituant le maillage ;
- une barrière contre la diffusion de l'oxygène et donc une meilleure protection contre la thermo-oxydation, d'où une meilleure tenue à la chaleur.

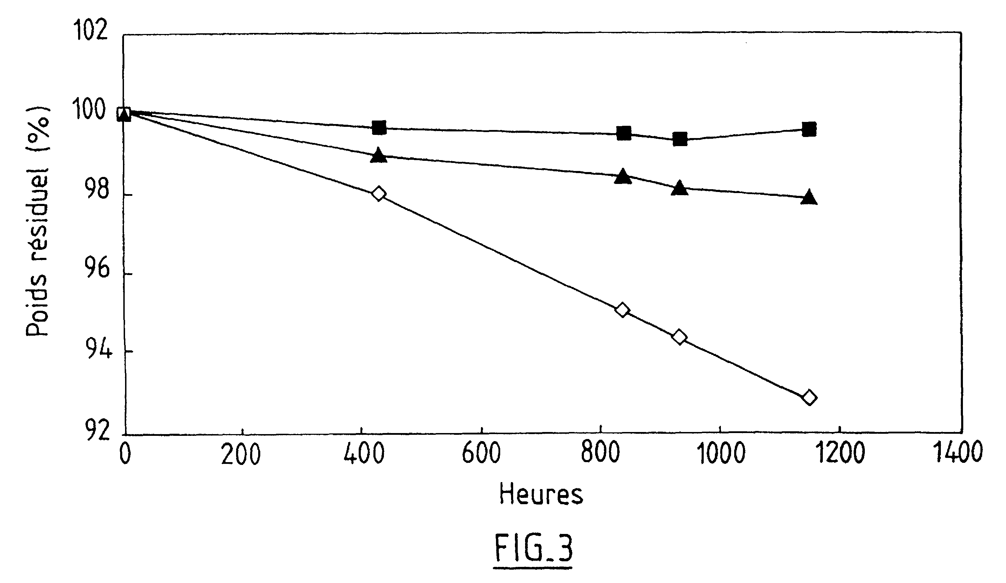

Aussi, comme illustré sur la figure 3, on peut constater que ce polymère à cristaux liquides (carrés noirs), lorsqu'il est soumis à un étuvage à une température comprise entre 180°C et 185°C, pendant plus de mille heures, ne dégaze pratiquement pas. Par contre, pour le polystyrène syndiotactique (losanges blancs), le dégazage dans les mêmes conditions correspond, après mille heures, à une perte en poids de presque 10 %.

On remarque qu'il est alors très avantageux de mélanger 15% de polymère à cristaux liquides avec le polystyrène syndiotactique. En effet, dans ce cas (triangles noirs), la perte en poids, dans les mêmes conditions que précédemment, pendant mille heures, est inférieure à 2%.

A titre d'exemple, le polymère principal est du polystyrène syndiotactique, par exemple produit par Dow Chemicals, et le polymère à cristaux liquides est une résine polyester commercialisée sous la marque Zénite ® déposée par DuPont ®.

Avec cet exemple de mélange, les conditions de moulage sont préférentiellement les suivantes :
- la température du fût 10 est comprise entre 290 et 310° C ;
- la température de la buse 16 est de 305° C approximativement ;
- la durée de l'étape de remplissage est de 0,80 seconde ;
- la pression d'injection est de 120 bars ;
- la durée de l'étape de maintien est de 2 secondes ;
- la pression de maintien est de 60 bars ;
- la durée de l'étape de refroidissement est de 35 secondes.

D'autres compositions polymères comprenant un polymère principal et un polymère à cristaux liquides, autres que ceux cités ci-dessus, sont bien entendu utilisables pour la mise en oeuvre du procédé selon l'invention.

Le polymère principal peut comprendre des charges minérales pulvérulentes (talc, TiO₂, kaolin, mica, noir de carbone, carbonates tels que le carbonate de calcium).

On a décrit dans ce qui précède l'utilisation d'une presse à injection à vis, mais tout autre type de presse à injection convient et notamment une presse à injection à piston.

Le procédé suivant l'invention permet d'utiliser des presses à injection monomatière bien connues, au lieu des presses d'injection à double vis ou double piston qui en plus de leur complexité nécessitent des organes de commande complexes et délicats à mettre en oeuvre.

## Revendications

1. Procédé de fabrication de pièces (50) optiques pour dispositif d'éclairage ou de signalisation de véhicules automobiles, par injection en une seule étape dans un moule (6), d'une composition polymère à l'état fondu, **caractérisé en ce qu'**on mélange un polymère principal et un polymère à cristaux liquides ayant, à la température de mise en oeuvre du procédé, une viscosité plus faible que le polymère principal, pour obtenir la composition polymère.

2. Procédé selon la revendication précédente, **caractérisé en ce que** la composition polymère est injectée à partir d'une buse (16) dans le moule (6), ce moule étant maintenu, pendant une étape de remplissage du moule (6) et une étape de maintien, à une température inférieure à celle de la buse (16).

3. Procédé selon l'une des revendications précédentes, **caractérisé en ce que** le polymère principal est un polymère thermoplastique ou thermodurcissable.

4. Procédé selon l'une des revendications précédentes, **caractérisé en ce que** le polymère à cristaux liquides est en concentration inférieure à 50% en poids et préférentiellement inférieure à 15 %.

5. Procédé selon l'une des revendications précédentes, **caractérisé en ce que** le polymère à cristaux liquides est une résine polyester.

6. Procédé selon l'une des revendications précédentes, **caractérisé en ce que** le polymère principal est du polystyrène syndiotactique.

7. Procédé selon l'une des revendications précédentes, **caractérisé en ce qu'**il comprend un dépôt d'une matière réfléchissante, préférentiellement par aluminiage, directement sur une surface optique des pièces (50), sans vernissage de cette surface.

8. Pièce optique pour dispositif d'éclairage ou de signalisation de véhicules automobiles, obtenues par injection à l'état fondu en une seule étape dans un moule, d'une composition polymère, **caractérisée en ce qu'**elle comporte au moins une zone ayant un gradient de concentration en polymère à cristaux liquides, croissant en direction d'une surface de la pièce.

9. Pièce optique selon la revendication 8, **caractérisée en ce qu'**elle est constituée d'un polymère principal thermoplastique ou thermodurcissable et d'un polymère à cristaux liquides.

10. Pièce optique selon l'une des revendications 8 et 9, **caractérisée en ce que** le polymère principal est du polystyrène syndrotactique.

11. Pièce optique selon l'une des revendications 8 à 10, **caractérisée en ce que** le polymère à cristaux liquides est une résine polyster ayant ou pas des charges minérales, organiques ou autres.

12. Pièce optique selon l'une des revendications 8 à 11, **caractérisée en ce qu'**elle comporte un dépôt réfléchissant, préférentiellement réalisé par aluminiage, sur une surface optique, sans vernis entre cette surface et ce dépôt.

13. Pièce optique selon l'une des revendications 8 à 12, **caractérisé en ce que** le polymère à cristaux liquides forme un maillage.

## Patentansprüche

1. Verfahren zur Herstellung von optischen Elementen (50) für Kraftfahrzeugbeleuchtungs- oder Signalgebungsvorrichtungen durch Einspritzen einer Polymermischung in geschmolzenem Zustand in einem Arbeitsvorgang in eine Gussform (6),
**dadurch gekennzeichnet, dass** zum Erhalt der Polymermischung ein Grundpolymer mit einem flüssig-kristallinen Polymer gemischt wird, das bei der Temperatur der Verfahrensdurchführung eine geringere Viskosität hat als das Grundpolymer.

2. Verfahren nach dem vorhergehenden Anspruch,
**dadurch gekennzeichnet, dass** die Polymermischung von einer Spritzdüse (16) in die Form (6) gespritzt wird, wobei die Form während eines Füllvorgangs der Form (6) und eines Aufrechterhaltungsvorgangs auf einer Temperatur gehalten wird, die niedriger ist als die der Spritzdüse (16).

3. Verfahren nach einem der vorhergehenden Ansprüche,
**dadurch gekennzeichnet, dass** das Grundpolymer ein thermoplastisches oder duroplastisches Polymer ist.

4. Verfahren nach einem der vorhergehenden Ansprüche,
**dadurch gekennzeichnet, dass** das flüssig-kristalline Polymer eine Konzentration von weniger als 50 % Gewichtsanteil hat und vorzugsweise weniger als 15 %.

5. Verfahren nach einem der vorhergehenden Ansprüche,
**dadurch gekennzeichnet, dass** das flüssig-kristalline Polymer ein Polyesterharz ist.

6. Verfahren nach einem der vorhergehenden Ansprüche,
**dadurch gekennzeichnet, dass** das Grundpolymer ein syndiotaktisches Polystyrol ist.

7. Verfahren nach einem der vorhergehenden Ansprüche,
**dadurch gekennzeichnet, dass** es ein Ablagern eines reflektierenden Werkstoffes, vorzugsweise durch Aluminierung, unmittelbar auf eine optische Oberfläche der Elemente (50) ohne Lackieren der Fläche umfasst.

8. Optisches Element für Kraftfahrzeugbeleuchtungs- oder Signalgebungsvorrichtungen, das in einem einzigen Arbeitsschritt durch Einspritzen einer Polymermischung in flüssigem Zustand in eine Form erzielt wird,
**dadurch gekennzeichnet, dass** es wenigstens einen Bereich mit einem Konzentrationsgradienten flüssig-kristalliner Polymere quer zu einer Oberfläche des Elements umfasst.

9. Optisches Element nach Anspruch 8,
**dadurch gekennzeichnet, dass** es aus einem thermoplastischen oder duroplastischen Grundpolymer und einem flüssig-kristallinen Polymer gebildet ist.

10. Optisches Element nach einem der Ansprüche 8 oder 9,
**dadurch gekennzeichnet, dass** das Grundpolymer ein syndiotaktisches Polystyrol ist.

11. Optisches Element nach einem der Ansprüche 8 bis 10,
**dadurch gekennzeichnet, dass** das flüssig-kristalline Polymer ein Polyesterharz ist mit oder ohne mineralischen, organischen oder anderen Füllstoffen.

12. Optisches Element nach einem der Ansprüche 8 bis 11,
**dadurch gekennzeichnet, dass** es eine vorzugsweise durch Aluminierung erzeugte reflektierende Ablagerung auf einer optischen Oberfläche, ohne Lackierung zwischen der Oberfläche und der Schicht, aufweist.

13. Optisches Element nach einem der Ansprüche 8 bis 12,
**dadurch gekennzeichnet, dass** das flüssig-kristalline Polymer ein Gitter bildet.

## Claims

1. A process for making optical components (50) for lighting or indicating apparatus for motor vehicles, by injecting molten polymer composition in a single step into a mould (6), **characterised in that** a main polymer is mixed with a polymer having liquid crystals and having a lower viscosity than the main polymer at the working temperature of the process, whereby to obtain the polymer composition.

2. A process according to the preceding Claim, **characterised in that** the polymer composition is injected from a nozzle (16) into the mould (6), the said mould being maintained at a temperature lower than that of the nozzle (16) during a step of filling the mould and a holding step.

3. A process according to one of the preceding Claims, **characterised in that** the main polymer is a thermoplastic or thermosetting resin.

4. A process according to one of the preceding Claims, **characterised in that** the liquid crystal polymer has a concentration lower than 50% by weight, and preferably lower than 15%.

5. A process according to one of the preceding Claims, **characterised in that** the liquid crystal polymer is a polyester resin.

6. A process according to one of the preceding Claims, **characterised in that** the main polymer is syndiotactic polystyrene.

7. A process according to one of the preceding Claims, **characterised in that** it has a reflective material deposited, preferably by aluminisation, directly on an optical surface of the components (50), without the said surface being varnished.

8. An optical component for a lighting or indicating apparatus for motor vehicles, made by injection of a molten polymer composition into a mould in a single step, **characterised in that** it includes at least one zone having a concentration gradient of polymer having liquid crystals that increases towards a surface of the component.

9. An optical component according to Claim 8, **characterised in that** it comprises a thermoplastic or thermosetting main polymer and a polymer having liquid crystals.

10. An optical component according to Claim 8 or Claim 9, **characterised in that** the main polymer is syndiotactic polystyrene.

11. An optical component according to one of Claims 8 to 10, **characterised in that** the liquid crystal polymer is a polyester resin, with or without mineral, organic or other fillers.

12. An optical component according to one of Claims 8 to 11, **characterised in that** it has a reflective coating, preferably deposited by aluminisation, on an optical surface, without any varnish between the said surface and the said coating.

13. An optical component according to one of Claims 8 to 12, **characterised in that** the liquid crystal polymer forms a network pattern.
